# EUROPÄISCHE PATENTSCHRIFT

(11) **EP 1 248 007 B1**
(45) Veröffentlichungstag und Bekanntmachung des Hinweises auf die Patenterteilung: **14.01.2004**
(21) Anmeldenummer: 01108715.2
(22) Anmeldetag: 06.04.2001
(51) Int. Cl.: F16D 35/02

(54) **Flüssigkeitsreibungskupplung**
Viscous coupling
Accouplement à fluide visqueux

(43) Veröffentlichungstag der Anmeldung: 09.10.2002
(73) Patentinhaber: BorgWarner Inc., Troy, Michigan 48007-5060 (US)
(72) Erfinder: Tilly, Christian, 88690 Uhldingen-Mühlhofen (DE); Buchholz, Thomas, 88709 Meersburg (DE); Niedermaeier, Ulrich, 88718 Daisendorf (DE)
(74) Vertreter: Patentanwälte Westphal, Mussgnug & Partner

(56) Entgegenhaltungen:
- EP-A- 0 316 137
- DE-A- 4 037 265
- US-A- 4 305 491
- PATENT ABSTRACTS OF JAPAN vol. 1998, no. 05, 30. April 1998 (1998-04-30) & JP 10 009290 A (TOSOK CORP), 13. Januar 1998 (1998-01-13)

## Beschreibung

Die Erfindung betrifft eine Flüssigkeitsreibungskupplung, insbesondere für den Lüfter des Kühlers einer Brennkraftmaschine, gemäß dem Oberbegriff des Anspruchs 1.

Eine Flüssigkeitsreibungskupplung dieser Gattung ist aus der US 4 305 491 bekannt. Die Flüssigkeitsreibungskupplung, häufig auch Viskositätskupplung genannt, dient zum Antrieb des Lüfters des Kühlers einer Brennkraftmaschine. Die Kupplung wird durch einen Temperatursensor gesteuert. Hierzu dient ein Hubmagnet, der über eine Kolbenstange ein Ventilelement betätigt, welches den Zufluß der viskosen Flüssigkeit in eine Arbeitskammer steuert, in welcher diese Flüssigkeit eine reibschlüssige Kupplung zwischen einem antriebsseitigen und einem abtrieb-seitigen Kupplungsorgan bewirkt.

Die Betätigung des Ventilelements durch die Kolbenstange, die koaxial in der Antriebswelle angeordnet ist, macht es möglich, den Hubmagneten und dessen Steuerungsanschlüsse auf der Rückseite der Kupplung und des über die Kupplung angetriebenen Lüfters anzuordnen. Dadurch ist ein platzsparender und montagefreundlicher Einbau des Lüfters und der Kupplung möglich.

Bei der bekannten Flüssigkeitsreibungskupplung ist der gesamte Hubmagnet-Mechanismus ebenso wie die durch diesen betätigte Kolbenstange in die rotierende Antriebswelle integriert. Daher ist es notwending, den Erregerstrom in die mit der Antriebswelle rotierende Erregerspule über Schleifkontakte einzuspeisen, die einem Verschleiß unterworfen sind.

Der Erfindung liegt die Aufgabe zugrunde, eine Flüssigkeitsreibungskupplung der eingangs genannten Gattung so zu verbessern, daß verschleißanfällige Schleifkontakte vermieden werden. Diese Aufgabe wird erfindungsgemäß gelöst durch eine Flüssigkeitsreibungskupplung mit den Merkmalen des Anspruchs 1.

Vorteilhafte Ausführungen und Weiterbildungen der Erfindung sind in den Unteransprüchen angegeben.

Erfindungsgemäß ist der die Kolbenstange betätigende Anker koaxial unmittelbar in der hohlen Antriebswelle geführt. Die Erregerspule ist dagegen nicht in die Antriebswelle integriert, sondern sitzt in einem gesonderten Magnetkörper, der die Antriebswelle koaxial umschließt und in welchem die Antriebswelle drehbar ist. Auf diese Weise kann der Magnetkörper mit der Erregerspule feststehend montiert werden, so daß keine Schleifkontakte zur Stromeinspeisung in die Erregerspule notwendig sind. Die Antriebswelle ist zumindest in dem den Anker führenden und umschließenden Teil aus einem weichmagnetischen Werkstoff gefertigt, wobei eine Trennfuge aus einem nicht magnetischen Werkstoff bewirkt, dass der Magnetfluss nicht in der Antriebswelle kurzgeschlossen wird, sondern durch den Anker geführt wird. Ebenso ist der Magnetkörper aus einem weichmagnetischen Werkstoff gefertigt, so daß der Magnetfluß der Erregerspule durch den Magnetkörper, den den Anker umschließenden Bereich der Antriebswelle und den Anker geführt wird. Der feststehende Einbau der Erregerspule vereinfacht den Aufbau und die Montage und verringert die Störanfälligkeit.

Die Hubmagnet-Steuerung kann so ausgebildet sein, daß der Anker zwischen zwei Endstellungen bewegt wird. Bei einer solchen sog. ON-OFF-Steuerung werden die Kupplung und damit der Lüfter zeitlich getaktet geschaltet. Liegt die Taktfrequenz über einer durch die Trägheit des Systems (Massenträgheit und Viskosität der Flüssigkeit) bestimmten Grenzfrequenz, so können der Anker und das Ventilelement innerhalb einer Periode des Schalttaktes keinen vollständigen Hubzyklus ausführen und der Anker und das Ventilelement stellen sich auf einen mittleren Hubweg ein. Über die Taktfrequenz kann somit die Hublage des Ankers und damit der Öffnungsgrad des Ventilelements gesteuert werden, so daß ein kontinuierlicher Kupplungseingriff erreicht werden kann.

In einer anderen Ausführung wird der Hubmagnet als Proportional-Hubmagnet angesteuert. Die Hublage des Ankers kann hierbei innerhalb des gesamten Hubweges kontinuierlich eingestellt werden durch das Gleichgewicht der auf den Anker wirkenden Kräfte, nämlich einerseits der durch die Erregerstromstärke bestimmten Magnetkraft und andererseits der Rückstellfederkraft. Über die Steuerung der Erregerstromstärke und das zunehmende Eintauchen des Ankers in den ferromagnetischen Bereich der Antriebswelle kann in dieser Ausführung das kontinuierliche Greifen der Kupplung gesteuert werden.

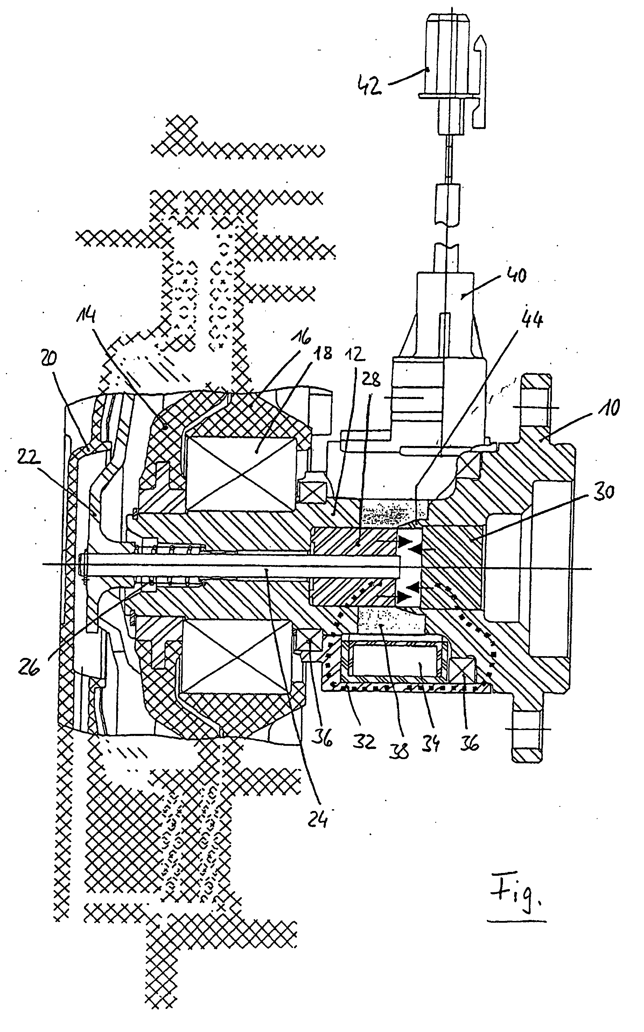

Im Folgenden wird die Erfindung anhand eines in der Zeichnung dargestellten Ausführungsbeispieles näher erläutert. Dabei zeigt die einzige Figur einen Axialschnitt durch die Betätigung der Flüssigkeitsreibungskupplung.

Die Flüssigkeitsreibungskupplung dient zum Antrieb eines in der Zeichnung nicht im Einzelnen dargestellten Lüfters für den Kühler einer Brennkraftmaschine durch eine ebenfalls nicht dargestellte Abtriebswelle an der Vorderseite des Motors (z. B. Kurbelwelle, Wasserpumpenwelle).

An dem vorderen Ende dieser Abtriebswelle wird mittels eines Flansches 10 drehfest eine Antriebswelle 12 befestigt. Die Antriebswelle 12 ist als Hohlwelle ausgebildet und aus einem weichmagnetischen Werkstoff gefertigt. An dem dem Flansch 10 entgegengesetzten vorderen Ende der Antriebswelle 12 ist eine Flüssigkeitsreibungskupplung angeordnet, über welche der nicht dargestellte Lüfter durch die Antriebswelle 12 antreibbar ist.

Die Flüssigkeitsreibungskupplung besteht aus einem ersten antriebsseitigen Kupplungsorgan 14, welches im Wesentlichen die Form einer Scheibe hat und drehfest auf das vordere Ende der Antriebswelle 12 aufgesetzt ist. Ein abtriebseitiges zweites Kupplungsorgan ist gebildet aus einem Kupplungsgehäuse 16, welches hinter dem ersten Kupplungsorgan 14 mittels eines Lagers 18 drehbar auf der Antriebswelle 12 gelagert ist. Das Kupplungsgehäuse 16 trägt an seinem Umfang die nicht dargestellten Flügel des Lüfters. An dem Kupplungsgehäuse 16 ist abgedichtet ein Kupplungsgehäusedeckel 20 befestigt. Der Kupplungsgehäusedeckel 20 schließt das Kupplungsgehäuse 16 an der Vorderseite ab und bildet mit diesem einen Aufnahmeraum für eine viskose Flüssigkeit. Der Aufnahmeraum ist durch das erste Kupplungsorgan 14 unterteilt in einen Vorratsraum zwischen dem ersten Kupplungsorgan 14 und dem Kupplungsgehäusedeckel 20 und einen Arbeitsraum zwischen dem ersten Kupplungsorgan 14 und dem Kupplungsgehäuse 16.

Das erste Kupplungsorgan 14 und das Kupplungsgehäuse 16 stehen sich in einer radialen Ebene mit kreisscheibenförmigen Scherflächen gegenüber. Viskose Flüssigkeit, die sich in dem Arbeitsraum befindet, gelangt zwischen die Scherflächen, wobei das durch die Antriebswelle 12 angetriebene erste Kupplungsorgan 14 über die Flüssigkeitsreibung das Kupplungsgehäuse 16 reibschlüssig mitnimmt, so daß die Flüssigkeitsreibungskupplung greift und der Lüfter angetrieben wird. Zur Steuerung der Flüssigkeitsreibungskupplung dient ein Ventilelement 22, welches in dem Vorratsraum angeordnet ist und mit Ventilöffnungen zusammenwirkt, die die viskose Flüssigkeit von dem Vorratsraum in den Arbeitsraum durchtreten lassen. Wird das Ventilelement 22 axial von dem ersten Kupplungsorgan 14 abgehoben, d. h. in der Zeichnung nach links bewegt, so öffnet es die Ventilöffnungen, so daß Flüssigkeit in den Arbeitsraum gelangen kann und den Reibschluß zwischen dem ersten Kupplungsorgan 14 und dem Kupplungsgehäuse 16 erzeugt. Wird das Ventilelement 22 gegen das erste Kupplungsorgan 14, d. h. in der Zeichnung nach rechts bewegt, so verschließt es zunehmend diese Ventilöffnungen, so daß zunehmend weniger und schließlich keine Flüssigkeit mehr in den Arbeitsraum gelangt. Die Drehmomentübertragung von dem ersten Kupplungsorgan 14 auf das Kupplungsgehäuse 16 und den Lüfter läßt zunehmend nach und wird schließlich vollständig unterbrochen.

Die Ausbildung der Flüssigkeitsreibungskupplung und des Ventilelements sind nicht Gegenstand der Erfindung und können in beliebiger Weise ausgebildet sein. Ihre Beschreibung im Einzelnen ist daher hier nicht erforderlich.

Zur Betätigung des Ventilelements 22 dient die nachfolgend beschriebene Hubmagnet-Steuerung.

In der als Hohlwelle ausgebildeten Antriebswelle 12 ist axial verschiebbar eine Kolbenstange 24 geführt. Auf dem aus dem vorderen Ende der Antriebswelle 12 herausragenden vorderen Ende der Kolbenstange 24 ist das Ventilelement 22 befestigt. Eine Rückstellfeder 26, die als Schraubendruckfeder ausgebildet ist, ist die Kolbenstange 24 umschließend in dem vorderen Ende der Antriebswelle 12 aufgenommen. Die Rückstellfeder 26 stützt sich mit ihrem vorderen Ende an dem Ventilelement 22 und mit ihrem hinteren Ende an einer Innenschulter der Antriebswelle 12 ab, so daß die Rückstellfeder 26 das Ventilelement 22 in die Ventiloffenstellung, d. h. in der Zeichnung nach links, vorspannt.

Auf dem hinteren Ende der Kolbenstange 24 sitzt ein kreiszylindrischer Anker 28 aus einem weichmagnetischen Werkstoff. Der Anker 28 ist axial geführt in einer erweiterten Ausdrehung der axialen Innenbohrung der Antriebswelle 12. Der Anker 28 ist axial bewegbar zwischen einer in der Zeichnung dargestellten vorderen Hubendlage und einer hinteren Hubendlage. In der vorderen Hubendlage schlägt der Anker 28 axial an einer Innenschulter der Antriebswelle 12 an. In dieser Hubendlage ist das Ventilelement 22 von den Ventilöffnungen abgehoben, so daß die viskose Flüssigkeit in den Arbeitsraum eindringen kann und die Kupplung greift. In der hinteren Hubendlage schlägt die Kolbenstange 24 mit dem Anker 28 an einem Stopfen 30 aus weichmagnetischem Werkstoff an, der die den Anker 28 führende erweiterte Innenbohrung der Antriebswelle 12 am hinteren Ende abschließt. In der hinteren Endlage des Ankers 28 verschließt das Ventilelement 22 die Ventilöffnungen, so daß die Zufuhr der Flüssigkeit aus dem Vorratsraum in den Arbeitsraum unterbrochen wird und die Kupplung außer Eingriff kommt.

.Auf dem Außenumfang der Antriebswelle 12 sitzt in dem Bereich des Ankerhubwegs ein Magnetkörper 32 aus einem weichmagnetischen Werkstoff. Der Magnetkörper 32 umschließt die Antriebswelle 12 koaxial und schließt eine Erregerspule 34 ein, die in der Innenumfangsfläche des Magnetkörpers 32 aufgenommen ist. Der Magnetkörper 32 ist axial beiderseits der Erregerspule 34 über Wälzlager 36 drehbar auf der Antriebswelle 12 gelagert.

Die Antriebswelle 12 ist in dem Axialbereich, der den Aufnahmeraum für den Anker 28 umschließt, von einer Trennfuge 38 unterbrochen, die aus einem nicht magnetisierbaren werkstoff besteht. Die Trennfuge 38 ist durch einen Ring gebildet, der in den Mantel der Antriebswelle 12 eingesetzt ist, z. B. eingeschweißt, eingelötet oder eingeklebt. Wie aus der Zeichnung erkennbar ist, ist die Trennfuge 38 axial so dimensioniert und angeordnet, daß sich die freie hintere Stirnfläche des Ankers 28 bei dessen Hubbewegung axial innerhalb eines sich konisch nach hinten erweiternden Ansatzes 44 des weichmagnetischen Mantels der Antriebswelle 12 verschiebt. Die zunehmende axiale Überlappung des Ankers 28 mit der sich vergrößernden Materialstärke des Ansatzes 44 erzeugt eine Proportionalität zwischen der Bestromung der Erregerspule 34 und der Hubkraft des Ankers 28. Die Erregerspule 34 erstreckt sich axial im wesentlichen über die Länge der Trennfuge 38, wobei die innere Mantelfläche der Erregerspule 34 ein ausreichendes radiales Spiel gegenüber der Antriebswelle 12 und der Trennfuge 38 aufweist, um eine freie Drehung zu ermöglichen. Axial beiderseits der Erregerspule 34 greift der Magnetkörper 32 über die Trennfuge 38 hinaus und kommt in axialer Richtung mit dem weichmagnetischen Werkstoff der Antriebswelle 12 zur Überlappung.

Ist eine proportionale Ansteuerung des Hubmagneten nicht erforderlich (z. B. bei einem ON-OFF-Betrieb), so kann der Ansatz 44 auch in anderer Form gestaltet sein oder eine Überlappung des Ankerhubweges mit dem weichmagnetischen Mantel der Antriebswelle 12 kann vollständig wegfallen.

Die Antriebswelle 12 wird über den Flansch 10 mit der Abtriebswelle gekuppelt und durch diese rotierend angetrieben. Der Magnetkörper 32 mit der Erregerspule 34 wird ortsfest montiert, so daß der Erregerspule 34 der Erregerstrom über eine ortsfeste Anschlußleitung 40 und einen Steckverbinder 42 zugeführt werden kann. Die Hubmagnet-Steuerung und ihre Anschlußleitung befinden sich auf der rückwärtigen Seite der Flüssigkeitsreibungskupplung und des Lüfters und können ortsfest montiert werden. Dadurch ergibt sich einerseits eine platzsparende und andererseits eine konstruktiv einfache Montage.

Im Betrieb wird die Antriebswelle 12 über die Abtriebswelle angetrieben. Ein elektronisches Kontrollgerät steuert die Bestromung der Erregerspule 34 in Abhängigkeit des Kühlbedarfs (z. B. der Kühlwassertemperatur). Ist eine erhöhte Kühlleistung erforderlich, wird die Stromzufuhr zu der Erregerspule 34 unterbrochen. Auf den Anker 28 wirkt keine Magnetkraft ein. Die Rückstellfeder 26 hebt das Ventilelement 22 von den Ventilöffnungen ab, so daß Flüssigkeit in den Arbeitsraum einströmt und die Kupplung greift. Der Lüfter wird angetrieben.

Soll die Kühlleistung verringert werden, wird die Erregerspule 34 bestromt. Der von der Erregerspule 34 erzeugte Magnetfluß wird durch den weichmagnetischen Magnetkörper 32, die weichmagnetische Antriebswelle 12 und den weichmagnetischen Anker 28 sowie den weichmagnetischen Stopfen 30 geführt, wie dies in der Zeichnung durch den punktierten Verlauf angedeutet ist. Die auf den Anker 28 einwirkende magnetische Kraft nimmt dabei zu, wenn sich der Anker nach hinten, d. h. in der Zeichnung nach rechts, bewegt und der Querschnitt für den magnetischen Fluss zwischen der hinteren Stirnkante des Ankers 28 und dem magnetischen Ansatz 44 an dem hinteren Rand der Trennfuge 38 größer wird. Der auf den Anker 28 einwirkenden Magnetkraft, die den Anker nach hinten bewegt, wirkt die Rückstellkraft der Rückstellfeder 26 entgegen. Bei dem Betrieb als Proportional-Hubmagneten wird durch das Gleichgewicht dieser beiden Kräfte die Hublage des Ankers 28 und damit der Öffnungsgrad des Ventilelements 22 bestimmt. Nimmt die der Erregerspule 34 zugeführte Stromstärke zu, nimmt die auf den Anker 28 einwirkende Magnetkraft zu, der Anker 28 bewegt sich nach hinten und bewegt das Ventilelement 22 zunehmend in die Schließstellung bis die ansteigende Rückstellkraft der Rückstellfeder 26 diese Magnetkraft ausgleicht. In der hinteren Endstellung des Ankers 28 verschließt das Ventilelement 22 die Ventilöffnungen vollständig, so daß keine Flüssigkeit mehr in den Arbeitsraum der Kupplung gelangt. Der Lüfter wird dann nicht mehr angetrieben.

Bei dem ON-OFF-Betrieb wird die Erregerspule 34 getaktet so bestomt, dass der Anker 28 in seine hintere Endstellung bewegt wird, bzw. die Stromzuführung wird unterbrochen, so dass nur die Rückstellfeder 26 auf den Anker 28 einwirkt. Erfolgt der Wechsel zwischen Bestromung und Unterbrechung mit einer so hohen Frequenz, dass der Anker 28 aufgrund seiner Trägheit und der auf das Ventilelement 22 wirkenden Viskosität der Flüssigkeit diesem Wechsel nicht vollständig folgen kann, so stellen sich auch hier der Anker 28 und damit das Ventilelement 22 auf eine mittlere Lage ein.

### Bezugszeichenliste

- 10: Flansch
- 12: Antriebswelle
- 14: erstes Kupplungsorgan
- 16: Kupplungsgehäuse
- 18: Lager
- 20: Kupplungsgehäusedeckel
- 22: Ventilelement
- 24: Kolbenstange
- 26: Rückstellfeder
- 28: Anker
- 30: Stopfen
- 32: Magnetkörper
- 34: Erregerspule
- 36: Wälzlager
- 38: Trennfuge
- 40: Anschlußleitung
- 42: Steckverbinder
- 44: Ansatz

## Patentansprüche

1. Flüssigkeitsreibungskupplung, insbesondere für den Lüfter des Kühlers einer Brennkraftmaschine, mit einer Antriebswelle (12), mit einem drehfest auf dem vorderen Ende der Antriebswelle angeordneten antriebsseitigen ersten Kupplungsorgan, mit einem drehbar auf der Antriebswelle angeordneten abtriebseitigen zweiten Kupplungsorgan, mit einem Ventilelement (22), welches den Zufluß einer viskosen Flüssigkeit für die flüssigkeitsreibschlüssige Kupplung des ersten und des zweiten Kupplungsorgans steuert, und mit einer Hubmagnet-Steuerung des Ventilelements (22) bestehend aus einer koaxial in der hohlen Antriebswelle (12) angeordneten Kolbenstange (24), durch deren aus der Antriebswelle (12) ragendes vorderes Ende das Ventilelement (22) gegen eine Rückstellfederkraft (26) axial betätigbar ist, aus einem am hinteren Ende der Kolbenstange (24) angebrachten Anker und aus einer den Anker (28) koaxial umschließenden Erregerspule (34), wobei der Anker (28) koaxial in der Antriebswelle (12) geführt ist,
**dadurch gekennzeichnet, daß** die Antriebswelle (12) zumindest in dem den Anker (28) führenden Teil aus einem weichmagnetischen Werkstoff mit einer nicht magnetisierbaren Trennfuge (38) besteht, daß die Erregerspule (34) in einem die Antriebswelle (12) koaxial umschließenden Magnetkörper (32) aus weichmagnetischem Werkstoff sitzt und daß die Antriebswelle (12) in dem Magnetkörper (32) drehbar ist.

2. Flüssigkeitsreibungskupplung nach Anspruch 1,
**dadurch gekennzeichnet, daß** die Antriebswelle (12) mittels Wälzlagern (36) in dem Magnetkörper (32) gelagert ist.

3. Flüssigkeitsreibungskupplung nach Anspruch 1 oder 2,
**dadurch gekennzeichnet, daß** der Anker (28) in einer erweiterten Ausdrehung der axialen Innenbohrung der Antriebswelle (12) geführt ist.

4. Flüssigkeitsreibungskupplung nach einem der vorhergehenden Ansprüche,
**dadurch gekennzeichnet, daß** die Hubmagnet-Steuerung als Proportional-Hubmagnet oder ON-OFF-Schaltmagnet ausgebildet ist.

5. Flüssigkeitsreibungskupplung nach einem der vorhergehenden Ansprüche,
**dadurch gekennzeichnet, daß** in dem von der hinteren Endstirnfläche des Ankers (28) bei dessen Hubbewegung überstrichenen axialen Bereich innerhalb der Trennfuge (38) ein sich nach hinten im Durchmesser erweiternder Ansatz (44) der Antriebswelle (12) vorgesehen ist.

6. Flüssigkeitsreibungskupplung nach einem der vorhergehenden Ansprüche,
**dadurch gekennzeichnet, daß** die Trennfuge (38) durch einen die Antriebswelle (12) unterbrechenden und in diese eingesetzten Ring aus dem nicht magnetisierbaren Werkstoff gebildet ist.

7. Flüssigkeitsreibungskupplung nach einem der Ansprüche 1-6,
**dadurch gekennzeichnet, daß** die Hublage des Ankers (28) über die Stromstärke gesteuert wird, mit welcher die Erregerspule (34) gespeist wird.

8. Flüssigkeitsreibungskupplung nach einem der Ansprüche 1-6,
**dadurch gekennzeichnet, daß** die Erregerspule (34) zeitlich getaktet bestromt wird und die Hublage des Ankers (28) durch die Taktfrequenz der Bestromung bestimmt wird.

## Claims

1. Fluid friction clutch, particularly for the fan of the radiator of an internal combustion engine, the said clutch having: a drive shaft (12) with a first clutch component on the drive side, which first clutch component is disposed on the front end of the drive shaft in a torsion-proof manner; a second clutch component on the output side, which second clutch component is disposed rotatably on the drive shaft; a valve element (22), which controls the influx of a viscous fluid for the coupling, in a fluid-friction-locking manner, of the first and second clutch components; and a lifting-magnet control system for the valve element (22), which control system consists of: a piston rod (24) which is disposed coaxially in the hollow drive shaft (12) and by whose front end, that protrudes out of the said drive shaft (12), the said valve element (22) can be actuated axially against a restoring spring force (26); an armature which is attached to the rear end of the piston rod (24); and an exciting coil (34) which coaxially encloses the said armature (28) which is guided coaxially in the drive shaft (12),
**characterised in that**
the drive shaft (12) consists, at least in the part that guides the armature (28), of a soft-magnetic material with a non-magnetisable separating joint (38); that the exciting coil (34) is seated in a magnet body (32) which is made of soft-magnetic ,material and coaxially surrounds the drive shaft (12); and that the said drive shaft (12) is rotatable in the said magnet body (32).

2. Fluid friction clutch according to claim 1,
**characterised in that**
the drive shaft (12) is mounted in the magnet body (32) by means of antifriction bearings (36) .

3. Fluid friction clutch according to claim 1 or 2,
**characterised in that**
the armature (28) is guided in an enlarged bored-out portion of the axial internal bore of the drive shaft (12) .

4. Fluid friction clutch according to one of the preceding claims,
**characterised in that**
the lifting-magnet control system is constructed as a proportional lifting magnet or ON-OFF switching magnet.

5. Fluid friction clutch according to one of the preceding claims,
**characterised in that**
an extension (44) of the drive shaft (12), which extension widens in diameter towards the rear, is provided **in that** axial region within the separating joint (38) which is swept by the rear end face of the armature (28) when the lifting movement of the latter occurs.

6. Fluid friction clutch according to one of the preceding claims,
**characterised in that**
the separating joint (38) is formed by a ring which is made of the non-magnetisable material and which interrupts the drive shaft (12) and is inserted in the latter.

7. Fluid friction clutch according to one of claims 1-6,
**characterised in that**
the lifting position of the armature (28) is controlled via the current intensity with which the exciting coil (34) is fed.

8. Fluid friction clutch according to one of claims 1-6,
**characterised in that**
the exciting coil (34) is supplied with current in a chronologically pulsed manner and the lifting position of the armature (28) is determined by the pulse frequency with which current is supplied.

## Revendications

1. Accouplement à fluide visqueux, en particulier pour le ventilateur du radiateur d'un moteur à combustion interne, avec un arbre d'entraînement (12), avec un premier organe d'accouplement, côté menant, disposé de façon assujettie en rotation sur l'extrémité avant de l'arbre d'entraînement, avec un deuxième organe d'accouplement, côté mené, disposé de façon à pouvoir tourner sur l'arbre d'entraînement, avec un élément de soupape (22) commandant l'amenée de fluide visqueux pour l'accouplement travaillant par liaison faisant intervenir un fluide visqueux du premier et du deuxième organe d'accouplement, et avec une commande à aimant de manoeuvre de l'élément de soupape (22), formé d'une tige de piston (24) disposée coaxialement dans l'arbre d'entraînement (12) creux, tige à travers l'extrémité avant de laquelle, sortant de l'arbre d'entraînement (12), l'élément de soupape (22) peut être actionné axialement à l'encontre de la force d'un ressort de rappel 26), d'un induit monté à l'extrémité arrière de la tige de piston (24) et d'une bobine excitatrice (34) entourant coaxialement l'induit (28), où l'induit (28) est guidé coaxialement dans l'arbre d'entraînement (12),
**caractérisé en ce que** l'arbre d'entraînement (12) est formé, au moins dans la partie assurant le guidage de l'induit (28), d'un matériau magnétiquement doux, ayant un joint de séparation (38) non magnétisable, **en ce que** la bobine excitatrice (34) est montée dans un corps magnétique (32) entourant coaxialement l'arbre d'entraînement (12), corps formé en matériau magnétiquement doux, et **en ce que** l'arbre d'entraînement (12) est susceptible de tourner dans le corps magnétique (32).

2. L'accouplement à fluide visqueux selon la revendication 1, **caractérisé en ce que** l'arbre d'entraînement (12) est monté dans le corps magnétique (32) à l'aide de paliers à roulement (36) .

3. Accouplement à fluide visqueux selon la revendication 1 ou 2, **caractérisé en ce que** l'induit (28) est guidé dans une saignée élargie du passage intérieur axial de l'arbre d'entraînement (12).

4. Accouplement à fluide visqueux selon l'une des revendications précédentes, **caractérisé en ce que** la commande à aimant de manoeuvre est réalisée sous la forme d'aimant de manoeuvre à caractéristique proportionnelle, ou d'aimant de manoeuvre à caractéristique de type MARCHE-ARRET.

5. Accouplement à fluide visqueux selon l'une des revendications précédentes, **caractérisé en ce que**, dans la zone axiale, balayée par la face frontale d'extrémité arrière de l'induit (28) lors de son mouvement de course, à l'intérieur du joint de séparation (38), est prévu un appendice (34), s'élargissant vers l'arrière en diamètre, de l'arbre d'entraînement (12).

6. Accouplement à fluide visqueux selon l'une des revendications précédentes, **caractérisé en ce que** le joint de séparation (38) est formé par une bague, interrompant l'arbre d'entraînement (12) et insérée dans celui-ci, la bague étant formé du matériau non magnétisable.

7. Accouplement à fluide visqueux selon les revendications 1 à 6, **caractérisé en ce que** la position en course de l'induit (28) est commandée par le biais de l'intensité du courant à l'aide duquel la bobine excitatrice (34) est alimentée.

8. Accouplement à fluide visqueux selon l'une des revendications 1 à 6, **caractérisé en ce que** la bobine excitatrice (34) est alimentée électriquement de façon cadencée temporellement, et la position en course de l'induit (28) est déterminée par la fréquence de cadencement de l'alimentation électrique.
